# EUROPÄISCHE PATENTANMELDUNG

(11) **EP 1 887 337 A2**
(43) Veröffentlichungstag der Anmeldung: **13.02.2008**
(21) Anmeldenummer: 07015612.0
(22) Anmeldetag: 08.08.2007
(51) Int. Cl.: G01L 5/28

(54) **Verfahren und Vorrichtung zur Prüfung von Fahrzeugbremsen an mehrachsgetriebenen Fahrzeugen**

(30) Priorität: 11.08.2006 DE 102006037771
(71) Anmelder: MAHA Maschinenbau Haldenwang GmbH & Co. KG, 87490 Haldenwang (DE)
(72) Erfinder: Knestel, Anton, 87498 Hopferbach (DE); Modlmeir, Peter, 87448 Waltenhofen-Lanzen (DE)
(74) Vertreter: Beetz & Partner

(57) **Zusammenfassung**

Die Erfindung betrifft eine Vorrichtung zur Prüfung von Fahrzeugbremsen an mehrachsgetriebenen Fahrzeugen, mit zwei Rollenpaaren 2, 2', die jeweilig mit einem Antrieb 5, 5' verbunden sind, wobei die Antriebe 5, 5' mit jeweils einer Kraftmesseinrichtung 6, 6' gekoppelt sind und einer Steuereinheit zum Ansteuern der Antriebe 5, 5', dadurch gekennzeichnet, dass die Antriebe 5, 5' von der Steuereinheit derart angesteuert werden, dass die auf den Rollenpaaren 2, 2' aufstehenden Räder 4, 4' einer Fahrzeugachse 16, 16' in gleicher Drehrichtung angetrieben werden, wobei die Prüfdrehdrehzahl bzw. Prüfgeschwindigkeit so geregelt wird, dass im Wesentlichen keine Drehzahldifferenzen der beiden Räder 4, 4' auftreten und eine Ansprechdrehzahl einer zwischen den Achsen 16, 16'; 17, 17' des Fahrzeugs angeordneten automatischen Kupplung 7, 8 nicht erreicht wird.

## Beschreibung

Die Erfindung betrifft eine Vorrichtung und ein Verfahren zur Prüfung von Fahrzeugbremsen an mehrachsgetriebenen Fahrzeugen, die universell für derzeitige Fahrzeuge ohne einen hohen technischen Aufwand einsetzbar sind. Hierbei wird ein Prüfstand mit zwei Rollenpaaren derart gesteuert, dass die Prüfgeschwindigkeit in gleichsinniger Richtung mit sehr geringer Geschwindigkeit auf eine gleiche Umfangs- bzw. Winkelgeschwindigkeit geregelt wird.

Derzeit sind verschiedene Fahrzeugantriebssysteme im Einsatz, bei denen ein sperrendes Mittendifferential und/oder eine Visko-Kupplung zwischen den Achsen verwendet werden. Bei diesen Fahrzeugen ist es für eine fehlerfreie Prüfung wichtig, dass über die Kardanwelle keine Kräfte übertragen werden. Wenn in der Kardanwelle Kräfte auftreten, so führt dies zu einer fehlerhaften Anzeige der Bremskräfte, was sich in der Regel dadurch zeigt, dass Bremskräfte von der aktiven auf die inaktive Seite übertragen werden, d. h. dass eine Seite mit einer intakten Bremse die zweite Seite mit einer nicht intakten Bremse mit abbremst. Im Extremfall kann dies dazu führen, dass eine absolut wirkungslose Bremse dem Messwert nach als "in Ordnung" befunden wird.

Es sind verschiedene Verfahren bekannt, um diesen Kraftaustausch bzw. diese Krafteinleitung in die Kardanwelle auf im Wesentlichen Null zu bringen.

In der DE 36 03 508 C2 ist ein Verfahren beschrieben, bei dem die beiden Fahrzeugräder in entgegengesetzter Richtung angetrieben werden. Dies führt normalerweise dazu, dass die Kardanwelle (die Differenzdrehzahl der beiden Antriebe ist Null) stehen bleibt und damit kein Moment übertragen kann. Beim Einleiten asymmetrischer Bremskräfte, was üblicherweise bei einer defekten Bremsanlage der Fall ist, kann durch unterschiedlichen Schlupf der Räder und Motoren dennoch eine Drehzahldifferenz auftreten, die zu Fehlern im Messergebnis führen kann. Dies wird gemäß diesem Stand der Technik dadurch eliminiert, dass die Umfangsgeschwindigkeiten der Räder regelungstechnisch konstant gehalten werden. Bei Antrieben mit starrer Verbindung kann jedoch auch dieses Regelungssystem überfordert sein, weil durch den unterschiedlichen Abrollumfang der Räder kleine Drehzahldifferenzen auftreten können, die bei einer starren Verbindung Kräfte übertragen und das Messergebnis verfälschen können.

Als Abhilfe können über optische Sensoren die Drehwinkel der Räder in einem überlagerten Regelkreis konstant gehalten werden. Zuvor wird über bewusst unterschiedliche Antriebskräfte der beiden Seiten das Zahnflankenspiel der Getriebeeinheiten ermittelt. Nach dieser Prozedur können die gegenläufigen Drehwinkel so geregelt werden, dass die Kardanwellen in der Mitte der ermittelten Zahnflanken verharren. Weiterhin ist im Stand der Technik gezeigt, dass bei gegenlaufenden Rollen die Bremse durch kurzzeitiges Antippen derart kurz in Aktion tritt, dass in der kurzen Zeit ein Anlegen der Zahnflanken nicht möglich sein soll (DE 37 01 020 C2).

Weiterhin sind Regelungsverfahren bekannt, die die Antriebsleistung der beiden gegenläufigen Antriebe minimieren. Wird ein Bremsmoment über die Kardanwelle übertragen, erhöht dies die Summe der beiden Kräfte, so dass man davon ausgehen kann, dass beim Minimalmaß der Summe keine Kraft über die Kardanwelle übertragen wird. Weiterhin ist ein Verfahren bekannt, bei dem die Antriebe derart gesteuert werden, dass das Zahnflankenspiel in beiden Richtungen bewusst angefahren wird. Die Bremsenprüfung kann nur zwischen diesen beiden Extremas, d. h. im kraftlosen Zustand der Kardanwelle erfolgen (DE 39 35 378 A1 und DE 41 22 818 C2).

Ein gemeinsamer Nachteil aller oben angeführten Verfahren ist, dass zwischen den beiden Prüfrädern durch die unterschiedliche Drehrichtung sehr hohe Differenzdrehzahlen entstehen. Dies führt bei Fahrzeugen mit Querdifferentialsperren zu neuerlichen Problemen.

In der DE 101 63 616 B4 ist ein Verfahren beschrieben, bei dem die beiden zu prüfenden Räder in gleicher Richtung angetrieben werden. Die jeweils andere Achse wird hierbei auf einen Leerrollensatz gestellt. Durch zusätzliches Deaktivieren der Bremse an der nicht zu prüfenden Achse können die Räder frei durchdrehen, so dass sich in der Kardanwelle kein nennenswertes Moment aufbauen kann. Ein Nachteil ist jedoch der hohe Aufwand für das Deaktivieren der nicht zu prüfenden Bremsen.

Während in der Vergangenheit hauptsächlich Fahrzeuge mit starrem bzw. relativ starrem Kupplungssystem in Längsrichtung am Markt waren, kommen bei neueren Fahrzeuggenerationen elektrische oder mechanische Kupplungen zum Einsatz, die erst ab einer bestimmten Drehzahldifferenz aktiv werden. Weiterhin sind Fahrzeuge bekannt, die sog. Visko-Sperren in Längs- und Querrichtung installiert haben. Bei diesen Fahrzeugen versagen alle vorgenannten Verfahren.

Es ist eine Aufgabe der Erfindung, eine Vorrichtung und ein Verfahren zur Prüfung von Bremsen an mehrachsgetriebenen Fahrzeugen zu schaffen, die universell für derzeitige Fahrzeuge ohne einen hohen technischen Aufwand einsetzbar sind.

Die Aufgabe wird gemäß den Merkmalen der unabhängigen Patentansprüche gelöst. Die abhängigen Patentansprüche betreffen vorteilhafte Ausführungsformen und Weiterentwicklungen der Erfindung.

Erfindungsgemäß können die beiden zu prüfenden Fahrzeugräder gleichsinnig in Fahrrichtung mit sehr geringer Geschwindigkeit angetrieben werden. Eine Regelung der Umfangsgeschwindigkeit der Räder sorgt zum einen dafür, dass bei Einleiten eines Bremsmomentes die Antriebe nicht stehen bleiben und die Quersperre keine Verzerrung der Bremskräfte hervorruft. Durch eine beispielsweise vorgesehene Visko-Sperre in dem Längsstrang (Kardanwelle) wird bei sehr kleinen Prüfgeschwindigkeiten auch nur eine relativ kleine Kraft eingeleitet, die sich zwangsläufig durch die gleiche Prüfgeschwindigkeit auch gleich auf beide Räder verteilt. Diese Kraft kann vor der Prüfung als "Offset" gespeichert werden und von den geprüften Bremskräften subtrahiert werden.

Die Erfindung hat weitere Vorteile bei automatisch arbeitenden Kupplungen, die mechanisch arbeiten und geringe Drehzahldifferenzen erlauben oder elektrisch angesteuert werden. Durch die sehr geringen Prüfgeschwindigkeiten werden die Ansprechschwellen der Drehzahlsensoren (ABS-Sensoren) nicht erreicht, so dass die Fahrzeugelektronik eine entsprechende Drehzahldifferenz nicht detektiert. In diesem Fall bleiben die Kupplungen inaktiv, womit eine Fahrzeugprüfung auf normale Weise - jedoch mit sehr kleiner Geschwindigkeit - erfolgen kann.

Zusätzlich ist es möglich, den Prüfstand derart auszubilden, dass die Prüfrollen auch gegenläufig angetrieben werden können. Dadurch kann ein Prüfstand realisiert werden, der nach dem heutigen Stand zu vertretbaren Kosten alle auf dem Markt befindlichen Personenkraftwagen prüfen kann.

Da für die normalen Bremsenprüfungen eine Mindestprüfungsgeschwindigkeit für die Fahrzeugräder auf den Rollenpaaren bzw. für die Bremsrollen selbst vorgeschrieben ist, muss dafür gesorgt werden, dass die Prüfrollen mit einer hohen (normalerweise im Wesentlichen 5 km/h) und einer sehr kleinen (im Wesentlichen kleiner 1 km/h) Geschwindigkeit angetrieben werden können. Dies kann erfindungsgemäß dadurch erreicht werden, dass die Antriebe über Frequenzumrichter angesteuert werden und damit eine variable Antriebsdrehzahl erlauben. Erfindungsgemäß ist ferner eine Gleichlaufregelung der Antriebe gewährleistet.

Andererseits ist es auch denkbar, Antriebe mit einem Schaltgetriebe zu verwenden, wobei von hoher auf eine niedrige Drehzahl umgeschaltet werden kann. Die Drehzahlregelgeräte würden in diesem Fall nur einen relativ kleinen Regelbereich benötigen.

Die Ansprechdrehzahl der automatischen Kupplung liegt bei heutigen Fahrzeugen beispielsweise bei im Wesentlichen größer als 1 km/h, sodass bei einer sehr kleinen Geschwindigkeit, wie vorstehend erwähnt, diese Ansprechdrehzahl nicht erreicht wird und eine Bremsenprüfung erfindungsgemäß in vorteilhafter Weise erfolgen kann.

Erfindungsgemäß kann weiterhin die Steuereinheit eine Drehzahl der jeweiligen Tastrolle und damit eine Raddrehzahl im Wesentlichen konstant halten.

Weiterhin kann die Prüfdrehzahl zum Bremsenprüfen durch die Steuereinheit durch eine elektronische Regelung eingestellt werden.

Dadurch kann ein genaues Einhalten der Prüfdrehzahl sichergestellt werden.

Die Erfindung wird im Folgenden beispielhaft anhand der beiliegenden schematischen Zeichnungen näher erläutert. Es zeigen:
Fig. 1 eine Draufsicht auf die erfindungsgemäße Vorrichtung mit einem schematisch dargestellten Fahrzeug und
Fig. 2 eine Regeleinrichtung, die in einer Steuereinheit vorgesehen ist.

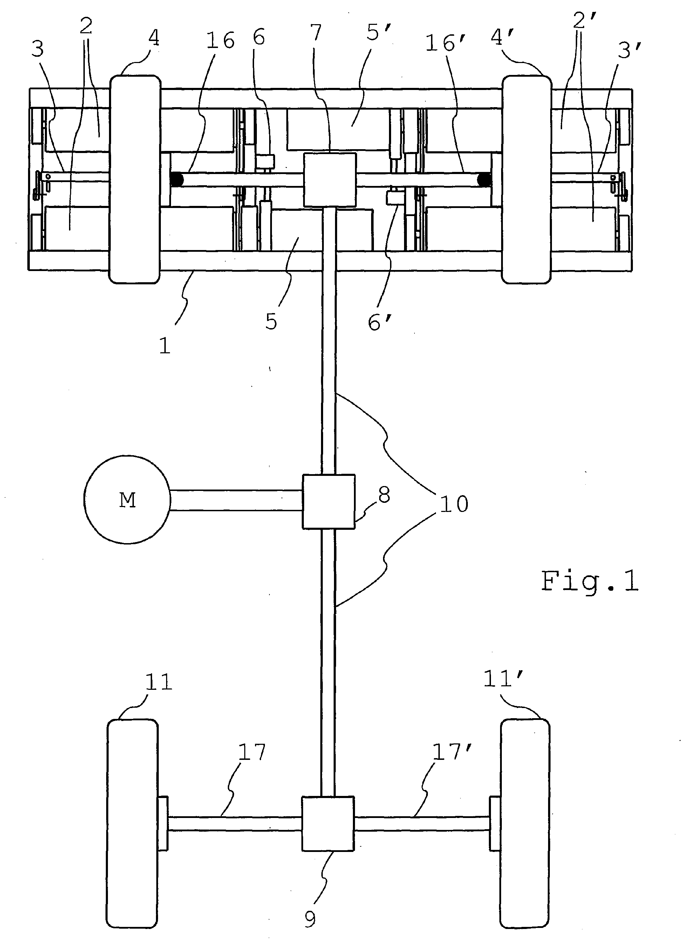

In der Fig. 1 ist ein schematisches Fahrzeug dargestellt, das mit beispielsweise den Vorderrädern 4, 4' in den Bremsenprüfstand 1 eingefahren ist. Die Räder 4, 4' werden über ein Differentialgetriebe 7 mit oder ohne Quersperre über die Kardanwelle 10 angetrieben. Die Kardanwelle 10 wiederum ist über ein sperrbares Mittendifferential bzw. eine automatische Kupplung 8 mit dem Differentialgetriebe 9 der zweiten Achse 17, 17' verbunden. Die zweite Achse 17, 17' ist mit Hinterrädern 11, 11' verbunden. Die erste Achse 16, 16' ist über das Differentialgetriebe 7 mit der Kardanwelle 10 verbunden. Die Kraftübertragung des Antriebsmotors M erfolgt über das sperrbare Mittendifferential 8. Treibt nun ein normaler Bremsenprüfstand die beiden Räder 4, 4' in Vorwärtsrichtung an, wird durch die Fahrzeugelektronik der Schlupf zwischen der Vorder- und Hinterachse 16, 16' und 17, 17' erkannt, was zur Sperrung des Mittendifferentials 8 führt. Dadurch wird über die Kardanwelle 10 die Kraft von der Vorderachse 16, 16' zur Hinterachse 17, 17' übertragen, wodurch eine Bremsenprüfung stark verfälscht werden würde. Auch ist es dadurch möglich, dass das Fahrzeug von den Prüfrollen 2, 2' klettert bzw. geschoben wird, da eine Kraft von der zu prüfenden Achse über die Kardanwelle 10 auf die nicht zu prüfende Achse übertragen wird.

Erfindungsgemäß wird für diese Fahrzeuge die Geschwindigkeit der Antriebsrollen 2, 2' so klein gehalten, dass sich die jeweiligen Tastrollen 3, 3' mit einer kleinen, aber gleichmäßigen Geschwindigkeit drehen. Diese Geschwindigkeit muss unterhalb der Ansprechschwelle der Fahrzeugsensorik bzw. Fahrzeugelektronik liegen. Beispielsweise kann das bei Geschwindigkeiten von im Wesentlichen kleiner als 1 km/h der Fall sein. Ist dies der Fall, bleibt das Mittendifferential 8 offen, was der Kardanwelle 10 eine Differenzgeschwindigkeit erlaubt (zwischen vorderer und hinterer Kardanwelle 10). Bei Betätigen der Bremse werden die von den Rädern 4, 4' erzeugten Bremskräfte auf die Rollen 2,2' übertragen. Diese werden wiederum von den Antriebsmotoren 5, 5', welche pendelnd gelagert sind, angetrieben. Die Reaktions- bzw. Stützmomente der Antriebe werden auf Kraftmesseinrichtungen 6, 6' eingeleitet und mit geeigneten Mitteln für den Prüfer visualisiert und/oder in eine Steuereinheit für eine Auswertung bereitgestellt.

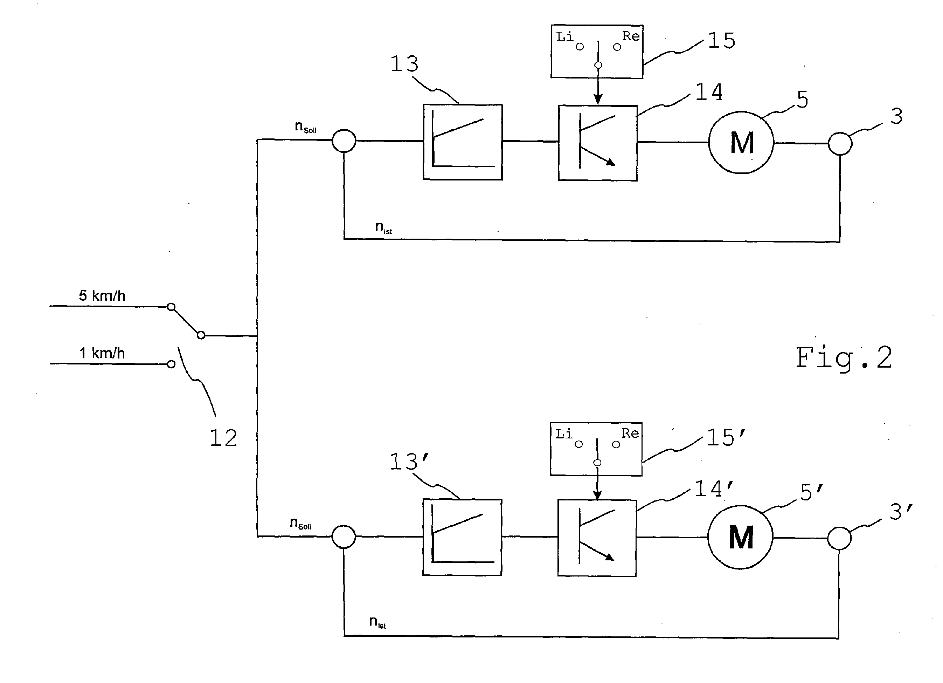

Die Drehzahl bzw. die Drehgeschwindigkeit der Tastrollen 3, 3' wird mit geeigneten Aufnehmern 18, 18' gemessen und einem Regelkreis zugeführt (siehe Fig. 2). Dazu kann ein Impulsgeber oder ein Tachogenerator verwendet werden. Dieses Signal kann mit einem Ausgang eines Geschwindigkeitsvorwahlschalters 12 verglichen werden und das Ausgangssignal kann einem PID-Regler 13, 13' zugeführt werden. Das Ausgangssignal des PID-Reglers 13, 13' kann nun einer Leistungsendstufe 14, 14' zugeführt werden, die den jeweiligen Antriebsmotor 5, 5' versorgt. Über einen Eingang kann die Leistungseinheit 14, 14' das Drehfeld und damit die Drehrichtung eines Motors 5, 5' ändern.

Bei Fahrzeugen mit nur einer Längssperre, wie z. B. einer Visko-Kupplung ist es möglich, gegenläufig angetriebene Prüfstandsrollen zu verwenden. Durch den gegenläufigen Antrieb bleibt die Drehgeschwindigkeit der Antriebswelle bei Null und ein Übertragen der beiden zu prüfenden Seiten wird dadurch verhindert. Hier werden jeweils nur die Bremskräfte des jeweils vorwärts drehenden Rades erfasst. Die entsprechende Umschaltung der Drehrichtung kann über das Befehlsgerät 15, 15' durchgeführt werden.

Bei Fahrzeugen mit Visko-Kupplungen an allen Differentialen 7, 8 und 9 wird der Prüf-Mode "kleine Geschwindigkeit" gewählt. Über die beiden PID-Regler 13, 13' in Fig. 2 werden die Geschwindigkeiten an beiden Fahrzeugrädern 4, 4' gleich groß gehalten, wodurch die Sperre im Differential 7 keine Differenzdrehzahl erhält. Dadurch wird das Differential 7 nicht aktiv. Die Differenzdrehzahl im Mittendifferential 8 ist bei der kleinen Prüfgeschwindigkeit noch so klein, dass dadurch auch nur kleine Kräfte auf das Mittendifferential 8 und die Räder 11, 11' übertragen werden.

Die Differenzdrehzahl im Mittendifferential 8 führt zu einer Kraftübertragung von der vorderen zur hinteren Achse 16, 16'; 17, 17'. Dieser Kraftübertrag ist jedoch durch die kleine Prüfgeschwindigkeit so klein, dass das Fahrzeug nicht aus den Prüfrollen 2,2' geschoben wird. Die dadurch auftretenden Schein-Bremskräfte an den Rädern 4, 4' können bei nicht betätigter Bremse gespeichert und von den Werten bei betätigter Bremse abgezogen werden, d. h. der Kraftübertrag im Mittendifferential 8 bleibt als Offset bei der eigentlichen Bremsenprüfung unberücksichtigt, während die beiden Regelmechanismen in Fig. 2 ein Übertragen von Kräften der beiden Räder 4, 4' über das Mittendifferential 7 verhindern. Das in der Fig..2 dargestellte Regelschema erlaubt über den Geschwindigkeitsvorwahlschalter 12 eine Vorgabe einer Soll-Drehzahl n_{Soll} der Rollenpaare 2, 2'. Die Solldrehzahl n_{Soll} wird mit der Ist-Drehzahl n_{Ist} abgeglichen. Die Ist-Drehzahl wird von einem der jeweiligen Tastrolle 3, 3' zugeordneten Aufnehmer 18, 18' ausgegeben. Die Differenzdrehzahl wird dem jeweiligen PID-Regler 13, 13' zugeführt, der wiederum die Leistungsendstufe 14, 14' ansteuert. Wie vorstehend erwähnt, kann durch ein jeweiliges Befehlgerät 15, 15' der Antrieb 5, 5' in Rechts- oder Links-Lauf geschaltet werden. Sofern beide Rollenpaare 2, 2' gleichsinnig laufen sollen, müssen beide Auswahlschalter des Befehlgeräts 15, 15' in die gleiche Richtung geschaltet werden; bei gegensinniger Drehrichtung der Rollenpaare 2, 2' muss eine Drehrichtung nach links und die andere Drehrichtung nach rechts geschaltet werden.

Die vorgenannten Ausführungsbeispiele und Merkmale können in beliebiger Weise miteinander kombiniert werden.

## Patentansprüche

1. Vorrichtung zur Prüfung von Fahrzeugbremsen an mehrachsgetriebenen Fahrzeugen, mit zwei Rollenpaaren (2, 2') die jeweilig mit einem Antrieb (5, 5') verbunden sind, wobei die Antriebe (5, 5') mit jeweils einer Kraftmesseinrichtung (6, 6') gekoppelt sind und einer Steuereinheit zum Ansteuern der Antriebe (5, 5'),
**dadurch gekennzeichnet, dass**
die Antriebe (5, 5') von der Steuereinheit derart angesteuert werden, dass die auf den Rollenpaaren (2, 2) aufstehenden Räder (4, 4') einer Fahrzeugachse (16, 16') in gleicher Drehrichtung angetrieben werden, wobei die Prüfdrehdrehzahl bzw. Prüfdrehgeschwindigkeit so geregelt wird, dass im wesentlichen keine Drehzahldifferenzen der beiden Räder (4, 4') auftreten und eine Ansprechdrehzahl einer zwischen den Achsen (16, 16'; 17, 17') des Fahrzeugs angeordneten automatischen Kupplung (7, 8) nicht erreicht wird.

2. Vorrichtung nach Anspruch 1, **dadurch gekennzeichnet, dass** die Steuereinheit eine Drehzahl der jeweiligen Tastrolle (3, 3') und damit eine Raddrehzahl im wesentlichen konstant hält.

3. Vorrichtung nach Anspruch 1 oder 2, **dadurch gekennzeichnet, dass** die Prüfdrehzahl zum Bremsenprüfen durch die Steuereinheit durch eine elektronische Regelung eingestellt wird.

4. Vorrichtung nach zumindest einem der Ansprüche 1 bis 3, **dadurch gekennzeichnet, dass** die Prüfgeschwindigkeit über ein Schaltgetriebe eingestellt wird.

5. Vorrichtung nach zumindest einem der Ansprüche 1 bis 4, **dadurch gekennzeichnet, dass** die Prüfdrehzahl bzw. Prüfgeschwindigkeit von der Steuereinheit auf im Wesentlichen kleiner als 1 km/h eingestellt wird.

6. Verfahren zur Prüfung von Fahrzeugbremsen an mehrachsgetriebenen Fahrzeugen,
**gekennzeichnet durch**
Ansteuern von Antrieben (5, 5') für Rollenpaare (2, 2') **durch** eine Steuereinheit derart, dass die auf den Rollenpaaren (2, 2) aufstehenden Räder (4, 4') einer Fahrzeugachse in gleicher Drehrichtung angetrieben werden, wobei die Prüfdrehdrehzahl bzw. Prüfdrehgeschwindigkeit so geregelt wird, dass im wesentlichen keine Drehzahldifferenzen der beiden Räder (4, 4') auftreten und eine Ansprechdrehzahl einer zwischen Achsen (16, 16'; 17, 17') des Fahrzeugs angeordneten automatischen Kupplung (7, 8) nicht erreicht wird.

7. Verfahren nach Anspruche 6, **dadurch gekennzeichnet, dass** die Prüfdrehzahl bzw. Prüfgeschwindigkeit auf im Wesentlichen kleiner als 1 km/h eingestellt wird.
